# EUROPEAN PATENT SPECIFICATION

(11) **EP 4 108 558 B1**
(45) Date of publication and mention of the grant of the patent: **24.04.2024**
(21) Application number: 21206254.1
(22) Date of filing: 03.11.2021
(51) Int. Cl.: B62J 19/00

(54) **STRADDLED VEHICLE**
GRÄTSCHSITZFAHRZEUG
VÉHICULE À ENFOURCHER

(30) Priority: 25.06.2021 JP 2021106039
(43) Date of publication of application: 28.12.2022
(73) Proprietor: Yamaha Hatsudoki Kabushiki Kaisha, Iwata-shi, Shizuoka 438-8501 (JP)
(72) Inventor: YU, Hui-Ming, Taoyuan (TW); HUANG, Chun-Yin, Taoyuan (TW)
(74) Representative: Studio Torta S.p.A.

(56) References cited:
- US-A1- 2005 092 535
- US-A1- 2005 257 974
- US-A1- 2012 103 710

## Description

### TECHNICAL FIELD

The present invention relates to a straddled vehicle.

### BACKGROUND ART

In recent years, some straddled vehicles are equipped with a motor generator. The motor generator serves as a starter motor that starts the engine and a generator that generates electricity by being driven by the engine. Further, a straddled vehicle equipped with a motor generator is equipped with a motor driver for controlling the motor generator.

For example, in the straddled vehicle disclosed in Taiwan Patent No. 691425, the motor driver is disposed in an upright posture behind the storage box. Further, in the straddled vehicle disclosed in Japanese Patent Application Laid-Open No. 2017-507845, the motor driver is disposed on the side of the storage box. A recess is provided on the side surface of the storage box, and the motor driver is disposed in the recess.

### SUMMARY OF THE INVENTION

The motor driver includes a drive circuit that drives the electric motor and a control circuit that controls the switching operation of the drive circuit. The drive circuit contains a large component such as a capacitance. Further, the drive circuit includes a component such as a FET that generate a large amount of heat. Therefore, the motor driver requires a space or a structure for heat dissipation. Therefore, the size of the motor driver tends to be large.

Therefore, when the motor driver is disposed behind the storage box as in the straddled vehicle disclosed in Taiwan Patent No. 691425 described above, the rear portion of the vehicle is enlarged in the front-rear direction of the vehicle. Further, by arranging the motor driver in an upright posture, the rear portion of the vehicle becomes larger in the vertical direction of the vehicle. When the motor driver is disposed in the recess on the side surface of the storage box as in the straddled vehicle disclosed in Japanese Patent Application Laid-Open No. 2017-507845 described above, the capacity of the storage box becomes small.

The storage box is required to be able to store a helmet. In particular, it is preferable to be able to store a large full-face helmet. However, a large depth and width are required for the storage box to accommodate a large helmet. Therefore, in a case where the motor driver is disposed as in Taiwan Patent No. 691425 described above, the rear portion of the vehicle is further enlarged in the front-rear direction of the vehicle. Further, in a case where the motor driver is disposed as in Japanese Patent Application Laid-Open No. 2017-507845 described above, it is difficult to store a large helmet in the storage box. The document US 2005/092535 A1 discloses a straddled vehicle in accordance with the preamble of claim 1.

On the other hand, the storage box is required to have a space for storing small items such as gloves, a cloth for wiping, or a raincoat from the viewpoint of convenience of storage. In order to facilitate the loading and unloading of small items, it is preferable that the space for small items is shallow rather than deep.

An object of the present invention is to provide a capacity for storing a large helmet in a storage box, reduce the size of the vehicle, and improve the convenience of storage.

A straddled vehicle according to one aspect of the present invention includes a seat, a body frame, a storage box, an engine unit, a motor generator, and a motor driver. The body frame includes a left seat frame and a right seat frame that support the seat. The storage box is located below the seat. The storage box is disposed between the left seat frame and the right seat frame in a vehicle width direction. The engine unit is swingably supported by the body frame. The engine unit includes an engine, a transmission mechanism, and a rear wheel. The engine is located below the storage box. The transmission mechanism transmits the power of the engine. The rear wheel is rotated by the power from the transmission mechanism. The motor generator has a starter motor function for starting the engine and a power generation function for generating electricity by being driven by the engine.

The storage box includes a first storage portion and a second storage portion. The first storage portion is configured to store a helmet. The first storage portion includes a first bottom wall and a first rear wall. The first rear wall extends upward from the first bottom wall. The second storage portion is disposed behind the first storage portion. The second storage portion includes a second bottom wall. The second bottom wall extends rearward from a top of the first rear wall. The motor driver is at least partially located below the second bottom wall. As seen in a vehicle plan view, the motor driver at least partially overlaps with the second storage portion. The motor driver is disposed so as to be inclined forward and downward so that the front end of the motor driver is located below the rear end of the motor driver. As seen in a vehicle side view, a forward extension line of an axis of the motor driver overlaps with the first storage portion. In the vehicle width direction, the motor driver is disposed between the left seat frame and the right seat frame. As seen in the vehicle side view, the motor driver at least partially overlaps the left seat frame or the right seat frame.

In the straddled vehicle according to the present invention, the engine unit is swingably supported by the body frame. That is, the straddled vehicle according to the present invention includes a unit swing type engine unit. The unit swing type engine unit has a smaller vertical movable range in the front portion than in the rear portion of the engine unit. Therefore, it is easy to deepen the front portion of the storage box.

In the straddled vehicle according to the present invention, the storage box includes the first storage portion and the second storage portion. The first storage portion is located in front of the second storage portion. Further, as seen in the vehicle side view, the forward extension line of the axis of the motor driver overlaps with the first storage portion. Therefore, by increasing the depth of the first storage portion, a large capacity of the first storage portion is provided. Further, the bottom of the second storage portion is shallower than that of the first storage portion, and the motor driver is disposed below the second storage portion. Therefore, the space below the second storage portion is used as a space for storing the motor driver. Therefore, the space for accommodating the motor driver does not narrow the first storage portion, and a large capacity is provided in the first storage portion. As a result, the storage box has enough capacity to store a large helmet. Further, since the bottom of the second storage portion is shallow, it is easy to put in and take out a small item, and the convenience of storage is improved.

In the straddled vehicle according to the present invention, the motor driver is disposed below the second storage portion. Therefore, the vehicle is downsized in the front-rear direction of the vehicle as compared with a case where the motor driver is disposed behind the second storage portion. Further, the bottom of the second storage portion is shallow, and the motor driver is disposed so as to be inclined forward and downward. Therefore, the space for accommodating the motor driver becomes smaller in the vertical direction of the vehicle as compared with a case where the motor driver is disposed upright. As a result, the straddled vehicle is downsized in the vertical direction of the vehicle.

In the straddled vehicle according to the present invention, the motor driver is disposed between the left seat frame and the right seat frame in the vehicle width direction. Further, as seen in the vehicle side view, the motor driver at least partially overlaps with the left seat frame or the right seat frame. That is, the space between the left and right seat frames is used to accommodate the motor driver. As a result, the straddled vehicle is downsized in the vehicle width direction. Further, the straddled vehicle is downsized in the vertical direction as compared with a case where the motor driver is disposed vertically apart from the left seat frame or the right seat frame.

A tilt angle of the axis of the motor driver with respect to a horizontal direction may be less than 45 degrees. In this case, since the motor driver is tilted at an angle closer to horizontal than vertical, the vehicle is downsized in the vertical direction of the vehicle.

The motor driver may be at least partially located behind the second storage portion. In this case, the heat of the motor driver is dissipated to the space behind the second storage portion. As a result, even if the side of the motor driver is surrounded by at least one of the left and right seat frames, the heat dissipation of the motor driver is improved.

The straddled vehicle may further include a cross member. The cross member may be disposed behind the second storage portion and may be connected to the left seat frame and the right seat frame. As seen in the vehicle plan view, the motor driver may overlap the cross member. In this case, the vehicle is downsized in the front-rear direction of the vehicle as compared with a case where the motor driver is disposed behind the cross member while avoiding the cross member.

The motor driver may be attached to the left seat frame and/or the right seat frame. In this case, the large motor driver is firmly supported.

The motor driver may include a driver body and a connector. The connector may protrude from the driver body. The connector may be tilted forward and downward. In this case, the ingress of water into the connector is suppressed.

The straddled vehicle may further include a battery. The battery may supply an electric power to the motor generator. The battery may be located in front of the first storage portion. In this case, the space in front of the first storage portion can easily provide a large dimension in the vertical direction. This space can be used to store a large capacity battery. Further, the rear portion of the straddled vehicle is downsized as compared with a case where the battery is disposed behind the first storage portion.

The straddled vehicle may further include an engine control unit. The engine control unit may control the engine. The motor driver may be integrated with the engine control unit. In this case, the motor driver and the engine control unit are compactly disposed in a common space.

As seen in the vehicle side view, a forward extension line of the bottom surface of the motor driver may overlap with the first storage portion. In this case, the depth of the first storage portion is large. As a result, a large capacity of the first storage portion is provided.

The motor driver may include a heat radiation fin. The heat radiation fin may protrude from the top surface of the motor driver. In this case, the heat from the motor driver easily escapes upward, so that the heat dissipation of the motor driver is improved.

The straddled vehicle may further include a rear cover. The rear cover may be located below the seat. The rear cover may include a bottom cover portion. The bottom cover portion may be disposed below the second storage portion. The motor driver may be disposed above the bottom cover portion with a gap from the bottom cover portion. In this case, the heat of the motor driver easily escapes from the gap with the bottom cover portion. As a result, the heat dissipation of the motor driver is improved.

### BRIEF DESCRIPTION OF THE DRAWINGS

FIG. 1 is a side view of a straddled vehicle according to an embodiment.
FIG. 2 is a side view showing a structure inside an engine unit and a rear cover.
FIG. 3 is a top view of a rear portion of the vehicle with a seat removed.
FIG. 4 is a diagram showing a cross section of the engine unit and a configuration of an engine control system.
FIG. 5 is a perspective view of a motor driver.
FIG. 6 is a perspective view of the motor driver.
FIG. 7 is an enlarged side sectional view of a storage box.
FIG. 8 is a top view of the rear portion of the vehicle in which the seat and the storage box are omitted.
FIG. 9 is a cross-sectional view taken along the line IX-IX in FIG. 7.

### DESCRIPTION OF EMBODIMENTS

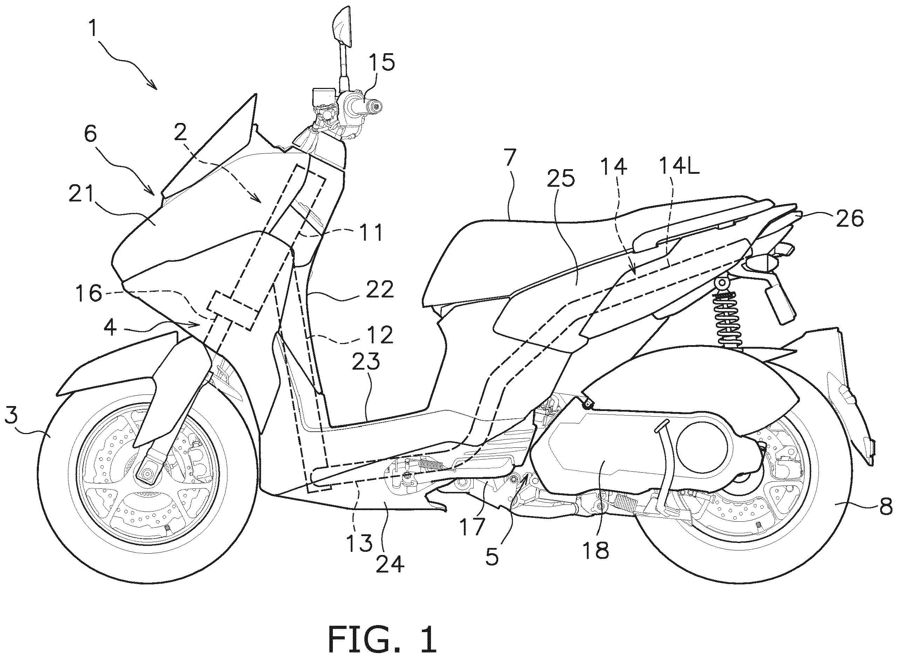

Hereinafter, a straddled vehicle according to an embodiment will be described with reference to the drawings. FIG. 1 is a side view of the straddled vehicle 1 according to the embodiment. The straddled vehicle 1 is a scooter. As illustrated in FIG. 1, the straddled vehicle 1 includes a body frame 2, a front wheel 3, a steering device 4, an engine unit 5, a body cover 6, and a seat 7.

The body frame 2 includes a head pipe 11, a down frame 12, a lower frame 13, and a seat frame 14. The head pipe 11 extends obliquely downward and forward. The down frame 12 extends downward from the head pipe 11. The lower frame 13 extends rearward from the down frame 12. The seat frame 14 is disposed below the seat 7. The seat frame 14 extends obliquely upward and rearward.

The front wheel 3 is rotatably supported by the steering device 4. The steering device 4 is rotatably supported by the head pipe 11. The steering device 4 includes a handlebar 15 and a front fork 16. The handlebar 15 is connected to the front fork 16. The front fork 16 rotatably supports the front wheel 3.

The body cover 6 includes a front cover 21, a leg shield 22, a footboard 23, a lower cover 24, and a rear cover 25. The front cover 21 is disposed in front of the head pipe 11. The front cover 21 is disposed above the front wheel 3. The leg shield 22 is disposed behind the front cover 21. The leg shield 22 is located behind the down frame 12.

The footboard 23 is disposed in front of the seat 7 and behind the leg shield 22. The footboard 23 has a flat shape over the vehicle width direction. However, the footboard 23 may have a central portion protruding upward. The footboard 23 is disposed above the lower frame 13. The lower cover 24 is disposed below the footboard 23. The rear cover 25 is disposed behind the footboard 23. The rear cover 25 is disposed below the seat 7. The rear cover 25 is disposed on the lateral sides of and below the seat frame 14. A tail light 26 is attached to the rear portion of the rear cover 25.

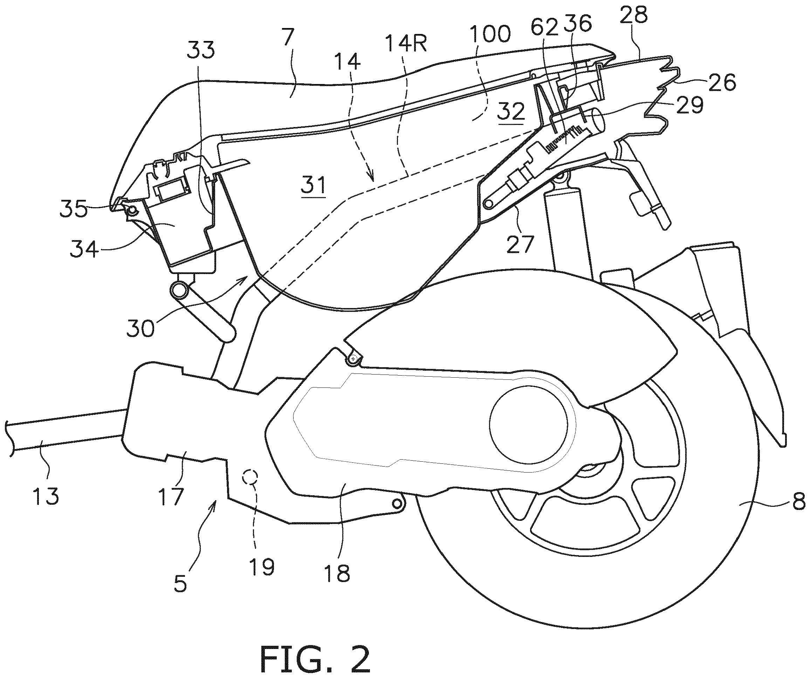

The engine unit 5 is disposed below the seat 7. FIG. 2 is a side view showing a structure inside the engine unit 5 and the rear cover 25. The engine unit 5 is supported by the body frame 2 so as to be swingable around a pivot shaft 19. The engine unit 5 includes an engine 17, a transmission mechanism 18, and a rear wheel 8. The engine 17 is supported by the seat frame 14. The transmission mechanism 18 transmits the power of the engine 17 to the rear wheel 8. The transmission mechanism 18 is, for example, a CVT (continuously variable transmission). However, the transmission mechanism 18 may be a transmission other than the CVT. The rear wheel 8 is rotatably supported by the transmission mechanism 18. The rear wheel 8 is rotated by the power from the transmission mechanism 18.

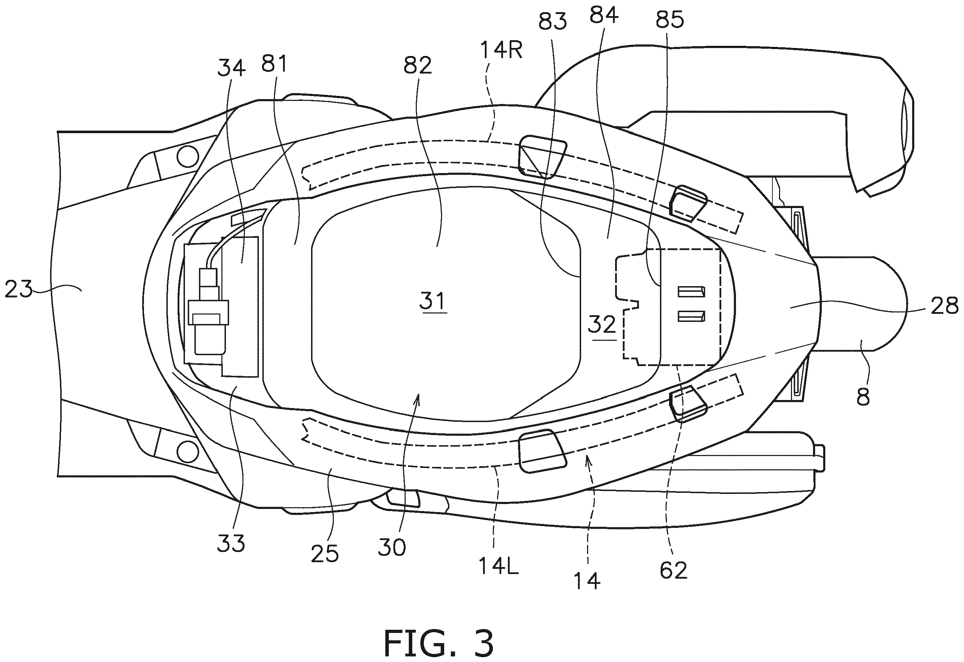

FIG. 3 is a top view of the rear portion of the vehicle with the seat 7 removed. As illustrated in FIGS. 2 and 3, the straddled vehicle 1 includes a storage box 30. The storage box 30 is disposed below the seat 7. The engine 17 is disposed below the storage box 30. The storage box 30 is disposed in the rear cover 25.

As illustrated in FIG. 3, the seat frame 14 includes a left seat frame 14L and a right seat frame 14R. The left seat frame 14L and the right seat frame 14R are disposed apart from each other in the vehicle width direction. The storage box 30 is disposed between the left seat frame 14L and the right seat frame 14R in the vehicle width direction. As seen in the vehicle side view, the storage box 30 overlaps the left and right seat frames 14L and 14R.

The storage box 30 includes a first storage portion 31 and a second storage portion 32. The first storage portion 31 has a larger volume than the second storage portion 32. As illustrated in FIG. 2, the first storage portion 31 is configured to store a helmet 100. Specifically, the first storage portion 31 is configured to store the full-face helmet 100. The second storage portion 32 is disposed behind the first storage portion 31. The second storage portion 32 communicates with the first storage portion 31. As seen in the vehicle side view, the first storage portion 31 overlaps the left and right seat frames 14L and 14R. As seen in the vehicle side view, the second storage portion 32 overlaps the left and right seat frames 14L and 14R.

The straddled vehicle 1 includes a battery storage portion 33. The battery storage portion 33 is located below the seat 7. The battery storage portion 33 is disposed in front of the storage box 30. The battery 34 is disposed in the battery storage portion 33. The front portion of the seat 7 is connected to the body frame 2 via a hinge 35. The seat 7 is rotatably supported by the hinge 35. The seat 7 opens and closes the storage box 30 by rotating around the hinge 35.

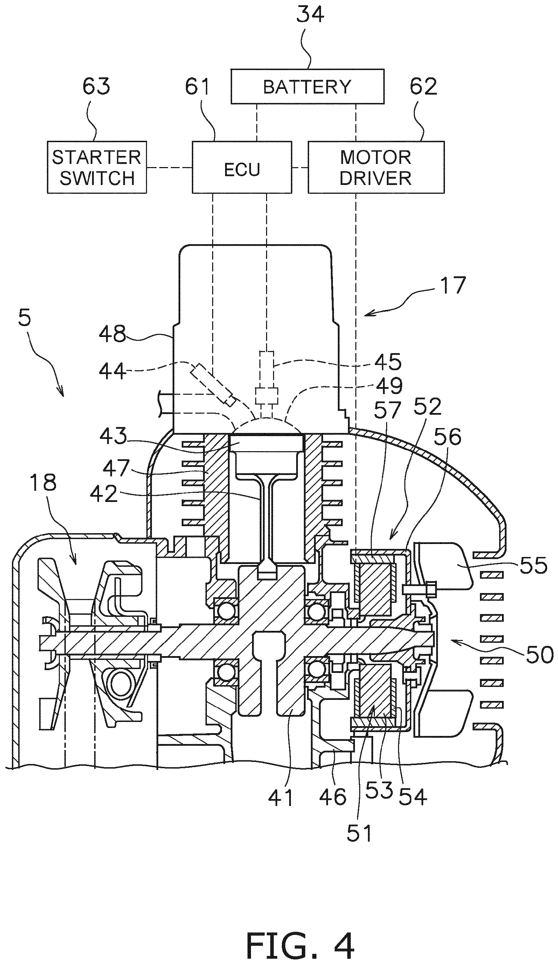

FIG. 4 is a diagram showing a cross section of the engine unit 5 and a configuration of a control system for the engine 17. As illustrated in FIG. 4, the engine 17 includes a crankshaft 41, a connecting rod 42, a piston 43, a fuel injector 44, a spark plug 45, a crankcase 46, a cylinder body 47, and a cylinder head 48. The crankshaft 41 is connected to the piston 43 via the connecting rod 42. A combustion chamber 49 is provided in the cylinder head 48. The crankshaft 41 is disposed in the crankcase 46. The piston 43 is disposed in the cylinder body 47. The fuel injector 44 and the spark plug 45 are disposed in the cylinder head 48. The fuel injector 44 injects fuel into the combustion chamber 49. The spark plug 45 ignites the air-fuel mixture in the combustion chamber 49.

The straddled vehicle 1 includes a motor generator 50. The motor generator 50 is attached to the engine 17. The motor generator 50 has a starter motor function for starting the engine 17 and a power generation function for generating electricity by being driven by the engine 17. The motor generator 50 is, for example, a three-phase brushless motor, and also functions as a generator. In the starter motor function, the electric power is supplied to the motor generator 50 from the battery 34. In the power generation function, the battery 34 is charged by the electric power from the motor generator 50.

The motor generator 50 includes a stator 51 and a rotor 52. The stator 51 includes a stator core 53 and a coil 54. The stator core 53 is attached to the crankcase 46. The coil 54 is wound around the stator core 53. The rotor 52 is attached to the crankshaft 41. The rotor 52 is rotated by the rotation of the crankshaft 41. A cooling fan 55 is attached to the rotor 52. The rotor 52 includes a rotor body 56 and a permanent magnet 57. The rotor body 56 has a cylindrical shape. The permanent magnet 57 is attached to the rotor body 56. The permanent magnet 57 is disposed so as to face the stator 51.

As illustrated in FIG. 4, the straddled vehicle 1 includes an engine control unit 61, a motor driver 62, and a starter switch 63. The engine control unit 61 and the motor driver 62 are electrically connected to the battery 34. The engine control unit 61 includes a computer. The engine control unit 61 stores a program and data for controlling the engine 17. The engine control unit 61 controls the engine 17 according to the program and the data. For example, the engine control unit 61 controls the ignition of the spark plug 45. The engine control unit 61 controls the injection of fuel by the fuel injector 44.

The motor driver 62 is electrically connected to the engine control unit 61. The motor driver 62 controls the motor generator 50. The motor driver 62 includes a switching element such as a FET and a capacitor. When the motor generator 50 functions as a starter motor, the motor driver 62 switches between energization and interruption of the current between the motor generator 50 and the battery 34. When the motor generator 50 functions as a generator, the motor driver 62 rectifies the alternating current from the motor generator 50 and controls the voltage.

The starter switch 63 is attached to, for example, the handlebar 15. The starter switch 63 is electrically connected to the engine control unit 61. When the starter switch 63 is pressed while the engine 17 is in the stopped state, the engine control unit 61 starts the engine 17. The engine control unit 61 controls the motor driver 62 to rotate the crankshaft 41. Further, the engine control unit 61 injects fuel by the fuel injector 44 and ignites by the spark plug 45. As a result, the engine 17 is started.

The engine control unit 61 may have an idling stop function. In the idling stop function, the engine control unit 61 stops the idling of the engine 17 when the vehicle is stopped. Further, the engine control unit 61 automatically starts the engine 17 when the vehicle starts without operating the starter switch 63.

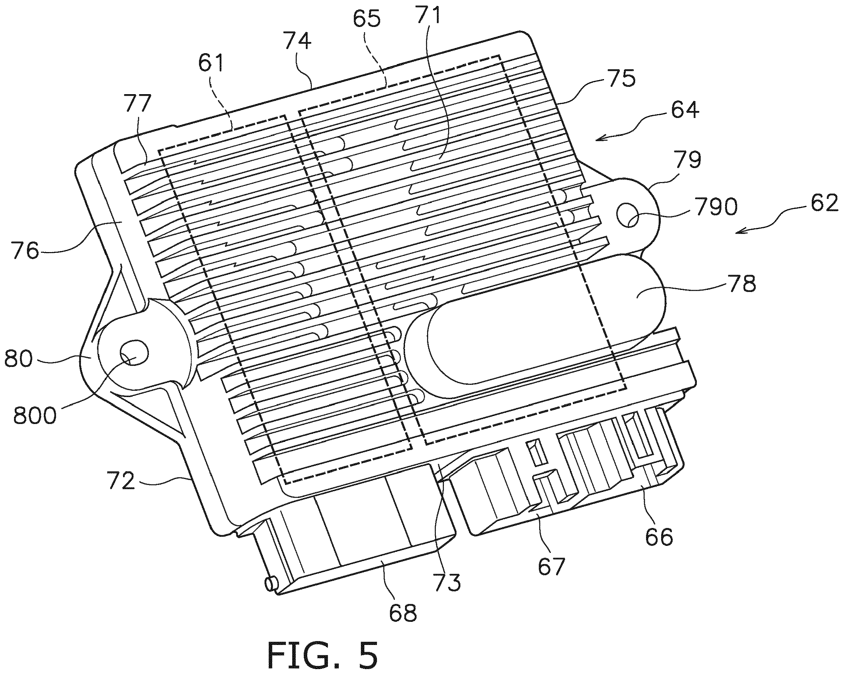

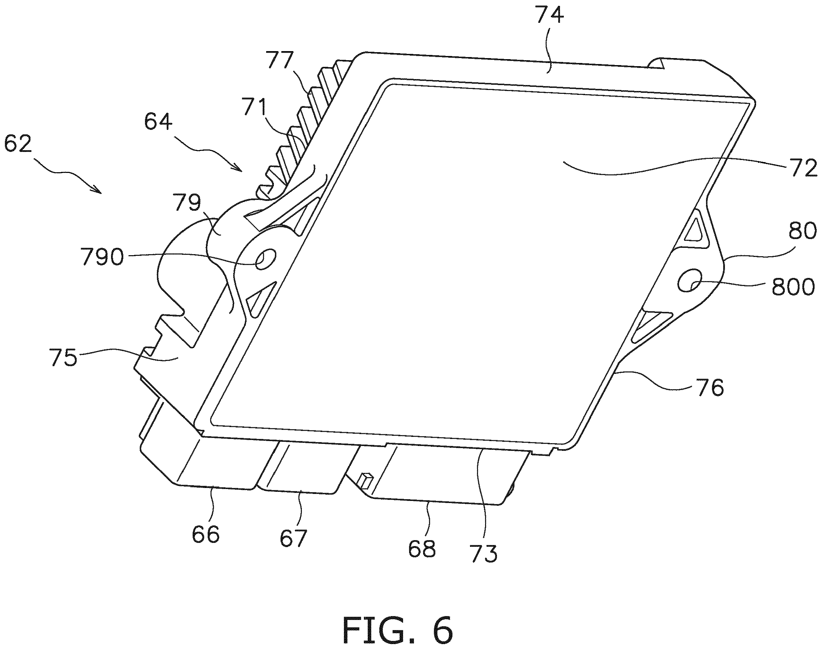

FIGS 5 and 6 are perspective views of the motor driver 62. In this embodiment, the motor driver 62 is integrated with the engine control unit 61. As illustrated in FIGS. 5 and 6, the motor driver 62 includes a driver body 64, a driver circuit 65, and connectors 66 to 68. The driver body 64 accommodates the driver circuit 65. The driver circuit 65 includes electronic components such as the switching element and the capacitor described above, and a substrate on which the electronic components are mounted.

The driver body 64 includes a top surface 71, a bottom surface 72, a first side surface 73, a second side surface 74, a third side surface 75, and a fourth side surface 76. The top surface 71 has a larger area than each of the first to fourth side surfaces 73 to 76. A plurality of heat radiation fins 77 are provided on the top surface 71. The plurality of heat radiation fins 77 project from the top surface 71. In the drawings, reference numeral 77 is attached only to a part of the plurality of heat radiation fins 77. A convex portion 78 is provided on the top surface 71. The convex portion 78 projects from the top surface 71. A tall electronic component such as a capacitor is disposed in the convex portion 78.

The bottom surface 72 is disposed on the opposite side of the top surface 71. The bottom surface 72 has a flat shape. The bottom surface 72 has a larger area than each of the first to fourth side surfaces 73 to 76. The first to fourth side surfaces 73 to 76 are connected to the top surface 71 and the bottom surface 72. The connectors 66 to 68 are connected to the first side surface 73. The second side surface 74 is disposed on the opposite side of the first side surface 73. The third side surface 75 and the fourth side surface 76 extend in a direction perpendicular to the first side surface 73 and the second side surface 74. The fourth side surface 76 is disposed on the opposite side of the third side surface 75.

Hereinafter, in the description of the motor driver 62, the direction perpendicular to the top surface 71 and the bottom surface 72 is defined as a thickness direction of the motor driver 62. A direction perpendicular to the first side surface 73 and the second side surface 74 is defined as a longitudinal direction of the motor driver 62. Further, a direction perpendicular to the third side surface 75 and the fourth side surface 76 is defined as a lateral direction of the motor driver 62. The driver body 64 has a thin shape that is smaller in the thickness direction than in the longitudinal direction and the lateral direction. The driver body 64 has a shape smaller in the longitudinal direction than in the lateral direction.

The driver body 64 includes a first mounting portion 79 and a second mounting portion 80. The first mounting portion 79 and the second mounting portion 80 project from the driver body 64 to the left and right of the motor driver 62. The first mounting portion 79 is connected to the third side surface 75. The second mounting portion 80 is connected to the fourth side surface 76. Holes 790 and 800 are provided in the first mounting portion 79 and the second mounting portion 80, respectively. The motor driver 62 is attached to the body frame 2 by the screws passed through the holes 790 and 800.

The connectors 66 to 68 protrude from the driver body 64. The connectors 66 to 68 project from the first side surface 73. The connectors 66 to 68 include a first connector 66, a second connector 67, and a third connector 68. The first to third connectors 66 to 68 are disposed in the lateral direction of the motor driver 62. The first connector 66 and the second connector 67 are connected to the driver circuit 65. The third connector 68 is connected to the engine control unit 61.

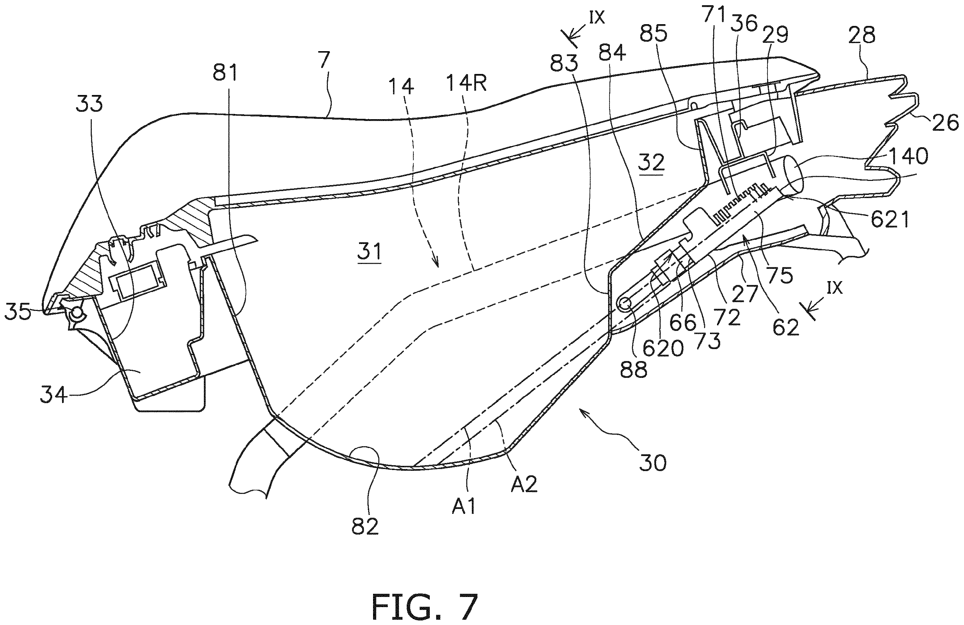

Next, the arrangement of the motor driver 62 in the straddled vehicle 1 will be described. As illustrated in FIG. 2, the motor driver 62 is disposed below the storage box 30. FIG. 7 is an enlarged side sectional view of the storage box 30. As illustrated in FIG. 7, the first storage portion 31 includes a first front wall 81, a first bottom wall 82, and a first rear wall 83. The first front wall 81 partitions the battery storage portion 33 and the first storage portion 31. The first front wall 81 extends in the vertical direction. The first bottom wall 82 extends rearward from the first front wall 81. The first bottom wall 82 has a shape recessed downward. The first rear wall 83 extends upward from the first bottom wall 82.

The second storage portion 32 includes a second bottom wall 84 and a second rear wall 85. The second bottom wall 84 extends rearward from the upper portion of the first rear wall 83. Specifically, the second bottom wall 84 extends obliquely upward from the upper portion of the first rear wall 83. The second bottom wall 84 overlaps the seat frame 14 as seen in the vehicle side view. The second rear wall 85 extends upward from the rear portion of the second bottom wall 84. The second rear wall 85 is located forward of the rear end 140 of the seat frame 14.

The rear cover 25 includes a bottom cover portion 27 and an upper cover portion 28. The bottom cover portion 27 is disposed below the second storage portion 32. The bottom cover portion 27 is disposed below the second bottom wall 84. The bottom cover portion 27 is disposed with a gap from the second bottom wall 84. The bottom cover portion 27 is disposed lower than the seat frame 14. The bottom cover portion 27 extends rearward of the second storage portion 32.

The upper cover portion 28 is disposed above the bottom cover portion 27. The upper cover portion 28 is disposed higher than the seat frame 14. The upper cover portion 28 extends rearward of the rear end 140 of the seat frame 14. The upper cover portion 28 extends rearward of the rear end of the seat 7. The upper cover portion 28 is disposed apart rearward from the second rear wall 85.

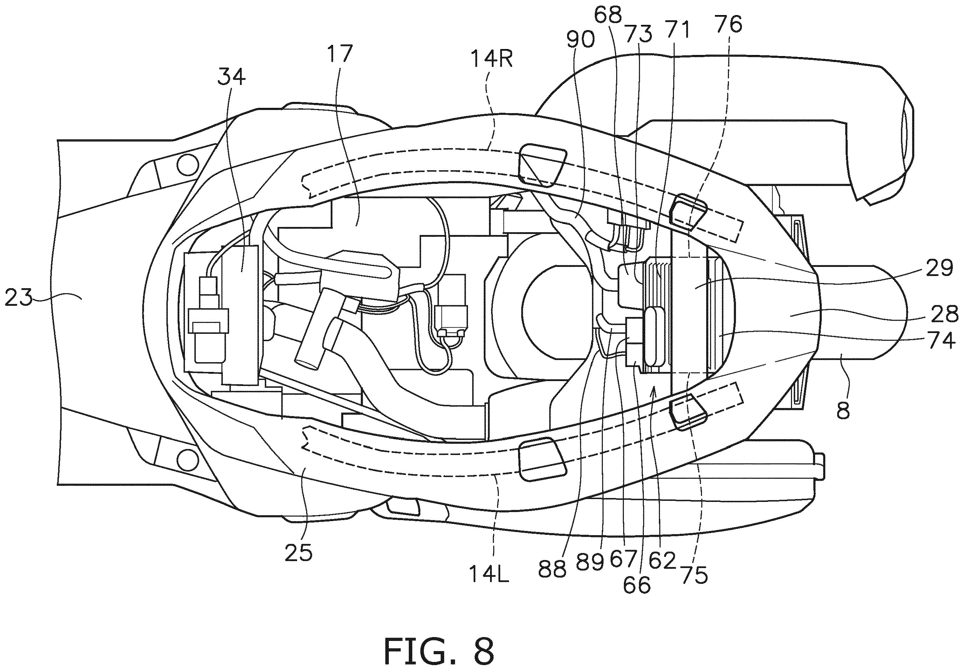

A cross member 29 is disposed behind the second storage portion 32. FIG. 8 is a top view of the rear portion of the vehicle in which the seat 7 and the storage box 30 are omitted. As illustrated in FIG. 8, the cross member 29 extends in the vehicle width direction. The cross member 29 is connected to the left seat frame 14L and the right seat frame 14R. As illustrated in FIG. 7, the cross member 29 receives a seat locking portion 36 in a state where the seat 7 is closed. The seat locking portion 36 projects downward from the bottom surface 72 of the rear portion of the seat 7. When the seat 7 is closed, the seat locking portion 36 is disposed between the upper cover portion 28 and the second rear wall 85.

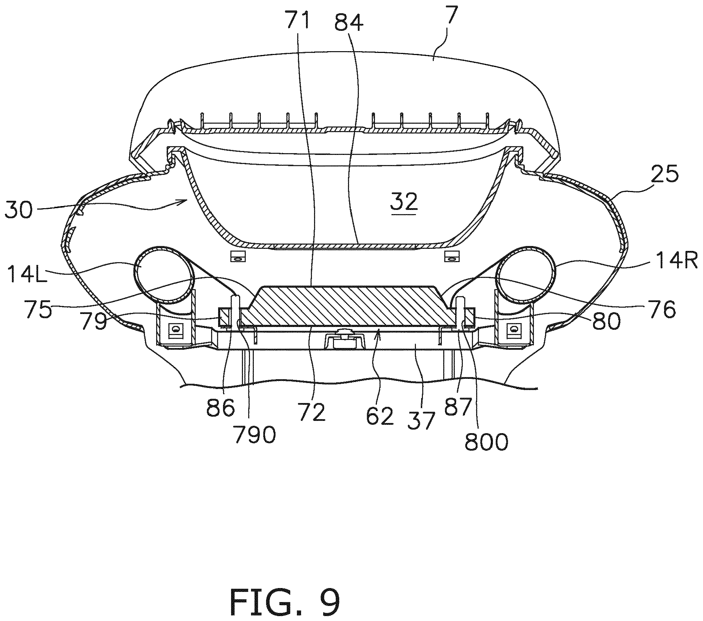

At least a portion of the motor driver 62 is located below the second bottom wall 84. As illustrated in FIG. 3, at least a portion of the motor driver 62 overlaps with the second storage portion 32 as seen in the vehicle plan view. FIG. 9 is a cross-sectional view taken along the line IX-IX in FIG. 7. As illustrated in FIGS. 3 and 9, in the vehicle width direction, the motor driver 62 is disposed between the left seat frame 14L and the right seat frame 14R.

As illustrated in FIG. 7, at least a portion of the motor driver 62 is located rearward of the second storage portion 32. That is, the rear end 621 of the motor driver 62 is located rearward of the second rear wall 85. The rear end 621 of the motor driver 62 is located forward of the rear end 140 of the seat frame 14. The front end 620 of the motor driver 62 is located between the first rear wall 83 and the second rear wall 85 in the front-rear direction of the vehicle.

As seen in the vehicle side view, at least a portion of the motor driver 62 overlaps with the seat frame 14. As seen in the vehicle side view, the rear end 621 of the motor driver 62 overlaps with the seat frame 14. The motor driver 62 is disposed above the bottom cover portion 27. The motor driver 62 is disposed with a gap from the bottom cover portion 27. The motor driver 62 is disposed below the cross member 29. As illustrated in FIG. 8, as seen in the vehicle plan view, at least a portion of the motor driver 62 overlaps with the cross member 29.

The motor driver 62 is disposed so as to be inclined forward and downward. The front end 620 of the motor driver 62 is located lower than the rear end 621. The top surface 71 of the motor driver 62 is disposed so as to face upward of the vehicle. The bottom surface 72 of the motor driver 62 is disposed so as to face downward of the vehicle. The top surface 71 and the bottom surface 72 of the motor driver 62 are disposed so as to be inclined forward and downward.

The first side surface 73 of the motor driver 62 is disposed so as to face forward of the vehicle. The second side surface 74 of the motor driver 62 is disposed so as to face rearward of the vehicle. The third side surface 75 of the motor driver 62 is disposed so as to face leftward of the vehicle. The fourth side surface 76 of the motor driver 62 is disposed so as to face rightward of the vehicle.

The thickness direction of the motor driver 62 is closer to the vertical direction of the vehicle than the front-rear direction of the vehicle. That is, the angle between the thickness direction of the motor driver 62 and the vertical direction of the vehicle is smaller than the angle between the thickness direction of the motor driver 62 and the front-rear direction of the vehicle. The longitudinal direction of the motor driver 62 is closer to the front-rear direction of the vehicle than the vertical direction of the vehicle. That is, the angle between the longitudinal direction of the motor driver 62 and the front-rear direction of the vehicle is smaller than the angle between the longitudinal direction of the motor driver 62 and the vertical direction of the vehicle. The lateral direction of the motor driver 62 coincides with the vehicle width direction. The motor driver 62 is disposed between the second storage portion 32 and the bottom cover portion 27 in the thickness direction of the motor driver 62. The motor driver 62 is disposed between the left seat frame 14L and the right seat frame 14R in the lateral direction of the motor driver 62.

The tilt angle of the axis of the motor driver 62 with respect to the horizontal direction is smaller than 45 degrees. The axis of the motor driver 62 is a straight line extending through the center of the first side surface 73 perpendicular to the first side surface 73. The connectors 66 to 68 project forward and downward from the driver body 64. The connectors 66 to 68 are inclined forward and downward.

As illustrated in FIG. 8, a first cable 88 is connected to the first connector 66. A second cable 89 is connected to the second connector 67. A third cable 90 is connected to the third connector 68. The cables 88 to 90 extend laterally from the connectors 66 to 68 below the second storage portion 32, respectively.

As illustrated in FIG. 7, as seen in the vehicle side view, a forward extension line A1 of the axis of the motor driver 62 overlaps with the first storage portion 31. As seen in the vehicle side view, a forward extension line A2 of the bottom surface 72 of the motor driver 62 overlaps with the first storage portion 31. That is, at least a portion of the first bottom wall 82 is located lower than the forward extension line A1 of the axis of the motor driver 62. At least a portion of the first bottom wall 82 is located lower than the forward extension line A2 of the bottom surface 72 of the motor driver 62.

As illustrated in FIG. 9, the motor driver 62 is attached to the left seat frame 14L and the right seat frame 14R via the stay 37. The stay 37 extends in the vehicle width direction. The stay 37 is connected to the left seat frame 14L and the right seat frame 14R. The stay 37 is disposed below the motor driver 62. The first mounting portion 79 and the second mounting portion 80 of the motor driver 62 are fixed to the stay 37 by screws 86 and 87. As a result, the motor driver 62 is attached to the left seat frame 14L and the right seat frame 14R.

In the straddled vehicle 1 according to the present embodiment, the engine unit 5 is swingably supported by the body frame 2. That is, the straddled vehicle 1 includes the unit swing type engine unit 5. The unit swing type engine unit 5 has a smaller movable range in the vertical direction in the front portion than in the rear portion of the engine unit 5. Therefore, it is easy to deepen the front portion of the storage box 30.

In the straddled vehicle 1, the storage box 30 includes the first storage portion 31 and the second storage portion 32. The first storage portion 31 is located in front of the second storage portion 32. Further, as seen in the vehicle side view, the extension line A1 of the axis of the motor driver 62 overlaps with the first storage portion 31. Therefore, the depth of the first storage portion 31 is large. Therefore, a large capacity of the first storage portion 31 is provided.

Further, the second storage portion 32 has a shallower bottom than the first storage portion 31, and the motor driver 62 is disposed below the second storage portion 32. Therefore, the space below the second storage portion 32 is used as a space for storing the motor driver 62. Therefore, the space for accommodating the motor driver 62 does not narrow the first storage portion 31, and a large capacity is provided in the first storage portion 31. As a result, the storage box 30 has a capacity for storing the large helmet 100. Further, since the bottom of the second storage portion 32 is shallow, it is easy to put in and take out small items, and the convenience of storage is improved.

In the straddled vehicle 1, the motor driver 62 is disposed below the second storage portion 32. Therefore, the vehicle is downsized in the front-rear direction of the vehicle as compared with a case where the motor driver 62 is disposed behind the second storage portion 32. Further, the bottom of the second storage portion 32 is shallow, and the motor driver 62 is disposed so as to be inclined forward and downward. Therefore, the space for accommodating the motor driver 62 is reduced to in the vertical direction as compared with a case where the motor driver 62 is disposed upright. As a result, the straddled vehicle 1 is downsized in the vertical direction.

In the straddled vehicle 1, the motor driver 62 is disposed between the left seat frame 14L and the right seat frame 14R in the vehicle width direction. Further, as seen in the vehicle side view, at least a portion of the motor driver 62 overlaps with the left seat frame 14L or the right seat frame 14R. That is, the space between the left and right seat frames 14L and 14R is used to accommodate the motor driver 62. As a result, the straddled vehicle 1 is downsized in the vehicle width direction. Further, the straddled vehicle 1 is downsized in the vertical direction as compared with a case where the motor driver 62 is disposed vertically apart from the left seat frame 14L or the right seat frame 14R.

The straddled vehicle 1 is not limited to the scooter, and may be another type of vehicle such as a moped. The structure of the body frame 2 is not limited to that of the above embodiment, and may be changed. For example, in the above embodiment, the left seat frame 14L and the right seat frame 14R have symmetrical shapes. Therefore, in the above embodiment, the seat frame 14 may mean either the left seat frame 14L or the right seat frame 14R. However, the left seat frame 14L and the right seat frame 14R may have asymmetrical shapes. In that case, the motor driver 62 may be disposed with respect to either the left seat frame 14L or the right seat frame 14R as in the above embodiment.

The structure of the storage box 30 is not limited to that of the above embodiment, and may be changed. For example, the first storage portion 31 does not have to be able to store the full-face helmet 100. The first storage portion 31 and the second storage portion 32 may be partitioned. As seen in the vehicle side view, the first storage portion 31 may be located higher than the forward extension line A1 of the axis of the motor driver 62. The arrangement of the battery 34 is not limited to that of the above embodiment, and may be changed.

The structure and arrangement of the motor driver 62 is not limited to that of the above embodiment, and may be changed. For example, the motor driver 62 may be a separate body from the engine control unit 61. The heat radiation fins 77 may be provided on the bottom surface 72 of the motor driver 62. In the vehicle plan view, the entire motor driver 62 may overlap with the second storage portion 32. The entire motor driver 62 may overlap the seat frame 14 as seen in the vehicle plan view. The connectors 66 to 68 may be disposed to face in the vehicle width direction or upward.

### REFERENCE SIGNS LIST

2: Body frame, 5: Engine unit, 7: Seat, 8: Rear wheel, 14L: Left seat frame, 14R: Right seat frame, 17: Engine, 18: Transmission mechanism, 25: Rear cover, 27: Bottom cover, 29: Cross member, 30: Storage box, 31: First storage portion, 32: Second storage portion, 34: Battery, 50: Motor generator, 61: Engine control unit, 62: Motor driver, 64: Driver body, 66-68: Connector, 77: Heat radiation fin, 82: First bottom wall, 83: First rear wall, 84: Second bottom wall

## Claims

1. A straddled vehicle (1) comprising:
a seat (7);
a body frame (2) including a left seat frame (14L) and a right seat frame (14R) that support the seat (7);
a storage box (30) disposed below the seat (7), the storage box (30) being disposed between the left seat frame (14L) and the right seat frame (14R) in a vehicle (1) width direction;
an engine unit (5) swingably supported by the body frame (2), the engine unit (5) including
an engine unit (5) disposed below the storage box (30),
a transmission mechanism (18) that transmits a power of the engine unit (5), and
a rear wheel (8) that rotates by the power from the transmission mechanism (18);
a motor generator (50) having a starter motor function for starting the engine unit (5) and a power generation function for generating an electricity by being driven by the engine unit (5); and
a motor driver (62) configured to control the motor generator (50), wherein
the storage box (30) includes
a first storage portion (31) including a first bottom wall (82) and a first rear wall (83) extending upward from the first bottom wall (82), the first storage portion (31) being configured to store a helmet, and **characterised in that**
a second storage portion (32) disposed behind the first storage portion (31), the second storage portion (32) including a second bottom wall (84) extending rearward from an upper portion of the first rear wall (83),
the motor driver (62) is at least partially located below the second bottom wall (84),
in a vehicle plan view, the motor driver (62) at least partially overlaps with the second storage portion (32),
the motor driver (62) is disposed to be inclined forward and downward so that a front end (620) of the motor driver (62) is located lower than a rear end (621) of the motor driver (62),
as seen in a vehicle side view, a forward extension line of an axis of the motor driver (62) overlaps with the first storage portion (31),
in the vehicle width direction, the motor driver (62) is disposed between the left seat frame (14L) and the right seat frame (14R), and
as seen in the vehicle side view, the motor driver (62) at least partially overlaps the left seat frame (14L) or the right seat frame (14R).

2. The straddled vehicle according to claim 1, wherein
an inclination angle of the axis of the motor driver (62) with respect to a horizontal direction is smaller than 45 degrees.

3. The straddled vehicle according to claim 1 or 2, wherein
the motor driver (62) is at least partially located rearward of the second storage portion (32).

4. The straddled vehicle according to any one of claims 1 to 3, further comprising:
a cross member (29) disposed behind the second storage portion (32), the cross member (29) being connected to the left seat frame (14L) and the right seat frame (14R), wherein
as seen in the vehicle plan view, the motor driver (62) overlaps the cross member (29).

5. The straddled vehicle according to any one of claims 1 to 4, wherein
the motor driver (62) is attached to the left seat frame (14L) and/or the right seat frame (14R).

6. The straddled vehicle according to any one of claims 1 to 5, wherein
the motor driver (62) includes
a driver body (64), and
a connector (66, 67, 68) protruding from the driver body (64), and
the connector (66, 67, 68) is tilted forward and downward.

7. The straddled vehicle according to any one of claims 1 to 6, further comprising:
a battery (34) that supplies an electric power to the motor generator (50), wherein
the battery (34) is disposed in front of the first storage portion (31).

8. The straddled vehicle according to any one of claims 1 to 7, further comprising:
an engine control unit (61) configured to control the engine (17), wherein
the motor driver (62) is integrated with the engine control unit (61).

9. The straddled vehicle according to any one of claims 1 to 8, wherein
as seen in the vehicle side view, a forward extension line of a bottom surface of the motor driver (62) overlaps with the first storage portion (31).

10. The straddled vehicle according to any one of claims 1 to 9, wherein
the motor driver (62) includes a heat radiation fin (77) protruding from a top surface of the motor driver (62).

11. The straddled vehicle according to any one of claims 1 to 10, further comprising:
a rear cover (25) located below the seat (7), wherein
the rear cover (25) includes a bottom cover portion (27) disposed below the second storage portion (32), and
the motor driver (62) is disposed above the bottom cover portion (27).with a gap from the bottom cover portion (27).

## Patentansprüche

1. Spreizsitz-Fahrzeug (1), das umfasst:
einen Sitz (7);
einen Karosserierahmen (2), der einen linken Sitzrahmen (14L) und einen rechten Sitzrahmen (14R) einschließt, die den Sitz (7) tragen;
ein Aufbewahrungsfach (30), das unter dem Sitz (7) angeordnet ist, wobei das Aufbewahrungsfach (30) in einer Breitenrichtung des Fahrzeugs (1) zwischen dem linken Sitzrahmen (14L) und dem rechten Sitzrahmen (14R) angeordnet ist;
eine Motor-Einheit (5), die schwenkbar an dem Karosserierahmen (2) gelagert ist, wobei die Motor-Einheit (5) enthält:
eine Motor-Einheit (5), die unterhalb des Aufbewahrungsfachs (30) angeordnet ist,
einen Getriebemechanismus (18), der eine Kraft der Motor-Einheit (5) überträgt, sowie
ein Hinterrad (8), das sich durch die Kraft von dem Getriebemechanismus (18) dreht;
einen Motorgenerator (50) mit einer Anlasser-Funktion zum Starten der Motor-Einheit (5) und einer Stromerzeugungs-Funktion, mit der Elektrizität erzeugt wird, indem sie von der Motor-Einheit (5) angetrieben wird; sowie
eine Motor-Ansteuerungseinrichtung (62), die zum Steuern des Motorgenerators (50) ausgeführt ist, wobei
das Aufbewahrungsfach (30) enthält:
einen ersten Aufbewahrungsabschnitt (31), der eine erste Bodenwand (82) und eine erste Rückwand (83) enthält, die sich von der ersten Bodenwand (82) nach oben erstreckt, wobei der erste Aufbewahrungsabschnitt (31) zum Aufbewahren eines Helms ausgeführt ist, und
**dadurch gekennzeichnet, dass**
ein zweiter Aufbewahrungsabschnitt (32) hinter dem ersten Aufbewahrungsabschnitt (31) angeordnet ist, wobei der zweite Aufbewahrungsabschnitt (32) eine zweite Bodenwand (84) enthält, die sich von einem oberen Abschnitt der ersten Rückwand (83) nach hinten erstreckt,
wobei die Motor-Ansteuerungseinrichtung (62) sich wenigstens teilweise unterhalb der zweiten Bodenwand (84) befindet,
die Motor-Ansteuerungseinrichtung (62), in einer Draufsicht auf das Fahrzeug, sich wenigstens teilweise mit dem zweiten Aufbewahrungsabschnitt (32) überlappt,
die Motor-Ansteuerungseinrichtung (62) so angeordnet ist, dass sie so nach vorn und nach unten geneigt ist, dass ein vorderes Ende (620) der Motor-Ansteuerungseinrichtung (62) tiefer liegt als ein hinteres Ende (621) der Motor-Ansteuerungseinrichtung (62),
eine vordere Verlängerungslinie einer Achse der Motor-Ansteuerungseinrichtung (62), in einer Seitenansicht des Fahrzeugs gesehen, sich mit dem ersten Aufbewahrungsabschnitt (31) überlappt,
die Motor-Ansteuerungseinrichtung (62) in der Breitenrichtung des Fahrzeugs zwischen dem linken Sitzrahmen (14L) und dem rechten Sitzrahmen (14R) angeordnet ist, und
die Motor-Ansteuerungseinrichtung (62), in der Seitenansicht des Fahrzeugs gesehen, sich wenigstens teilweise mit dem linken Sitzrahmen (14L) oder dem rechten Sitzrahmen (14R) überlappt.

2. Spreizsitz-Fahrzeug nach Anspruch 1, wobei
ein Neigungswinkel der Achse der Motor-Ansteuerungseinrichtung (62) in Bezug auf eine horizontale Richtung kleiner ist als 45°.

3. Spreizsitz-Fahrzeug nach Anspruch 1 oder 2, wobei
die Motor-Ansteuerungseinrichtung (62) sich wenigstens teilweise hinter dem zweiten Aufbewahrungsabschnitt (32) befindet.

4. Spreizsitz-Fahrzeug nach einem der Ansprüche 1 bis 3, das des Weiteren umfasst:
ein Quer-Element (29), das hinter dem zweiten Aufbewahrungsabschnitt (32) angeordnet ist, wobei das Quer-Element (29) mit dem linken Sitzrahmen (14L) sowie dem rechten Sitzrahmen (14R) verbunden ist, und
die Motor-Ansteuerungseinrichtung (62), in der Draufsicht auf das Fahrzeug gesehen, das Quer-Element (29) überlappt.

5. Spreizsitz-Fahrzeug nach einem der Ansprüche 1 bis 4, wobei
die Motor-Ansteuerungseinrichtung (62) an dem linken Sitzrahmen (14L) und/oder an dem rechten Sitzrahmen (14R) angebracht ist.

6. Spreizsitz-Fahrzeug nach einem der Ansprüche 1 bis 5, wobei die Motor-Ansteuerungseinrichtung (62) enthält:
einen Ansteuerungseinrichtungs-Körper (64) sowie
einen Verbinder (66, 67, 68), der von dem Ansteuerungseinrichtungs-Körper (64) vorsteht, und wobei der Verbinder (66, 67, 68) nach vorn und nach unten geneigt ist.

7. Spreizsitz-Fahrzeug nach einem der Ansprüche 1 bis 6, das des Weiteren umfasst:
eine Batterie (34), die dem Motorgenerator (50) elektrische Energie zuführt, wobei
die Batterie (34) vor dem ersten Aufbewahrungsabschnitt (31) angeordnet ist.

8. Spreizsitz-Fahrzeug nach einem der Ansprüche 1 bis 7, das des Weiteren umfasst:
eine Motorsteuerungs-Einheit (61), die zum Steuern des Motors (17) ausgeführt ist, wobei
die Motor-Ansteuerungseinrichtung (62) in die Motorsteuerungs-Einheit (61) integriert ist.

9. Spreizsitz-Fahrzeug nach einem der Ansprüche 1 bis 8, wobei
eine vordere Verlängerungslinie einer unteren Fläche der Motor-Ansteuerungseinrichtung (62), in der Seitenansicht des Fahrzeugs gesehen, sich mit dem ersten Aufbewahrungsabschnitt (31) überlappt.

10. Spreizsitz-Fahrzeug nach einem der Ansprüche 1 bis 9, wobei
die Motor-Ansteuerungseinrichtung (62) eine Wärmeabstrahlungs-Rippe (77) enthält, die von einer oberen Fläche der Motor-Ansteuerungseinrichtung (62) vorsteht.

11. Spreizsitz-Fahrzeug nach einem der Ansprüche 1 bis 10, das des Weiteren umfasst:
eine hintere Verkleidung (25), die sich unterhalb des Sitzes (7) befindet, wobei
die hintere Abdeckung (25) einen unteren Verkleidungsabschnitt (27) enthält, der unterhalb des zweiten Aufbewahrungsabschnitts (32) angeordnet ist, und
die Motor-Ansteuerungseinrichtung (62) oberhalb des unteren Verkleidungsabschnitts (27) mit einem Abstand zu dem unteren Verkleidungsabschnitt (27) angeordnet ist.

## Revendications

1. Véhicule à selle (1) comprenant :
un siège (7),
un cadre (2) incluant un cadre de siège gauche (14L) et un cadre de siège droit (14R) qui supportent le siège (7),
un casier de stockage (30) placé en dessous du siège (7), le casier de stockage (30) étant placé entre le cadre de siège gauche (14L) et le cadre de siège droit (14R) dans la direction de la largeur du véhicule (1),
une unité de moteur thermique (5) supportée par le cadre (2) tout en pouvant osciller, l'unité de moteur thermique (5) incluant :
une unité de moteur thermique (5) placée en dessous du casier de stockage (30),
un mécanisme de transmission (18) qui transmet la puissance de l'unité de moteur thermique (5), et
une roue arrière (8) qui est mise en rotation grâce à la puissance issue du mécanisme de transmission (18),
un moteur générateur (50) présentant une fonction de moteur de démarrage permettant de démarrer l'unité de moteur thermique (5) et une fonction de génération de puissance permettant de générer de l'électricité en étant entraînée par l'unité de moteur thermique (5), et
un dispositif d'entraînement de moteur (62) configuré pour commander le moteur générateur (50), où
le casier de stockage (30) inclut :
un premier élément de stockage (31) incluant une première paroi de fond (82) et une première paroi arrière (83) s'étendant vers le haut depuis la première paroi de fond (82), le premier élément de stockage (31) étant configuré pour stocker un casque et **caractérisé par** :
un second élément de stockage (32) disposé derrière le premier élément de stockage (31), le second élément de stockage (32) incluant une seconde paroi de fond (84) s'étendant vers l'arrière depuis la partie supérieure de la première paroi arrière (83),
le dispositif d'entraînement de moteur (62) est au moins partiellement situé en dessous de la seconde paroi de fond (84),
dans une vue en plan du véhicule, le dispositif d'entraînement de moteur (62) chevauche au moins partiellement le second élément de stockage (32),
le dispositif d'entraînement de moteur (62) est placé pour être incliné vers l'avant et vers le bas de sorte à ce que l'extrémité avant (620) du dispositif d'entraînement de moteur (62) soit située plus bas que l'extrémité arrière (621) du dispositif d'entraînement de moteur (62),
comme on peut le voir dans une vue latérale du véhicule, une ligne d'extension vers l'avant d'un axe du dispositif d'entraînement de moteur (62) chevauche le premier élément de stockage (31),
dans la direction de la largeur du véhicule, le dispositif d'entraînement de moteur (62) est placé entre le cadre de siège gauche (14L) et le cadre de siège droit (14R), et
comme on peut le voir dans la vue latérale du véhicule, le dispositif d'entraînement de moteur (62) chevauche au moins partiellement le cadre de siège gauche (14L) ou le cadre de siège droit (14R).

2. Véhicule à selle selon la revendication 1, dans lequel :
l'angle d'inclinaison de l'axe du dispositif d'entraînement de moteur (62) rapport à la direction horizontale est inférieur à 45 degrés

3. Véhicule à selle selon la revendication 1 ou la revendication 2, dans lequel :
le dispositif d'entraînement de moteur (62) est au moins situé à l'arrière du second élément de stockage (32).

4. Véhicule à selle selon l'une quelconque des revendications 1 à 3, comprenant en outre :
un élément transversal (29) disposé à l'arrière du second élément de stockage (32) l'élément transversal (29) étant relié au cadre de siège gauche (14L) et au cadre de siège droit (14R), dans lequel :
comme on peut le voir dans la vue en plan du véhicule, le dispositif d'entraînement de moteur (62) chevauche l'élément transversal (29).

5. Véhicule à selle selon l'une quelconque des revendications 1 à 4, dans lequel :
le dispositif d'entraînement de moteur (62) est fixé au cadre de siège gauche (14L) et/ou au cadre de siège droit (14R).

6. Véhicule à selle selon l'une quelconque des revendications 1 à 5, dans lequel le dispositif d'entraînement de moteur (62) inclut :
un corps de dispositif d'entraînement (64), et
un connecteur (66, 67, 68) dépassant du corps de dispositif d'entraînement (64), et
le connecteur (66, 67, 68) est incliné vers l'avant et vers le bas.

7. Véhicule à selle selon l'une quelconque des revendications 1 à 6, comprenant en outre :
une batterie (34) qui délivre de l'énergie électrique au moteur générateur (50), où
la batterie (34) est placée à l'avant du premier élément de stockage (31).

8. Véhicule à selle selon l'une quelconque des revendications 1 à 7, comprenant en outre :
une unité de commande de moteur thermique (61) configurée pour commander le moteur thermique (17), où
le dispositif d'entraînement de moteur (62) est intégré avec l'unité de commande de moteur thermique (61).

9. Véhicule à selle selon l'une quelconque des revendications 1 à 8, dans lequel :
comme on peut le voir dans la vue latérale du véhicule, une ligne d'extension vers l'avant de la surface de fond du dispositif d'entraînement de moteur (62) chevauche le premier élément de stockage (31).

10. Véhicule à selle selon l'une quelconque des revendications 1 à 9, dans lequel :
le dispositif d'entraînement de moteur (62) inclut un radiateur d'évacuation de chaleur (77) dépassant de la surface supérieure du dispositif d'entraînement de moteur (62) .

11. Véhicule à selle selon l'une quelconque des revendications 1 à 10, comprenant en outre :
un capot arrière (25) situé en dessous du siège (7), où
le capot arrière (25) inclut un élément de capot de fond (27) placé en dessous du second élément de stockage (32), et
le dispositif d'entraînement de moteur (62) est placé au-dessus de l'élément de capot de fond (27) avec un intervalle depuis l'élément de capot de fond (27).
